# EUROPÄISCHE PATENTSCHRIFT

(11) **EP 2 018 723 B1**
(45) Veröffentlichungstag und Bekanntmachung des Hinweises auf die Patenterteilung: **21.09.2011**
(21) Anmeldenummer: 06742906.8
(22) Anmeldetag: 12.05.2006
(51) Int. Cl.: H04B 10/12

(54) **VERFAHREN ZUM SENDEN VON OPTISCH ÜBERTRAGENEN DATEN ÜBER EINE FUNKANTENNE UND VORRICHTUNG**
METHOD FOR TRANSMITTING OPTICALLY TRANSMITTED DATA VIA A RADIO ANTENNA AND CORRESPONDING DEVICE
PROCÉDÉ POUR ENVOYER DES DONNÉES TRANSMISES PAR VOIE OPTIQUE AU MOYEN D'UNE ANTENNE RADIO ET DISPOSITIF CORRESPONDANT

(43) Veröffentlichungstag der Anmeldung: 28.01.2009
(73) Patentinhaber: Gigaset Communications GmbH, 81379 München (DE)
(72) Erfinder: ROHDE, Harald, 81673 München (DE)
(74) Vertreter: Michalski Hüttermann & Partner Patentanwälte
(86) Internationale Anmeldenummer: PCT/EP2006/004498
(87) Internationale Veröffentlichungsnummer: WO 2007/131520

(56) Entgegenhaltungen:
- EP-A2- 0 845 878
- EP-A2- 1 357 683
- WO-A-98/04057
- WO-A-03/067321
- NOEL L ET AL: "120MBIT/S QPSK RADIO-FIBRE TRANSMISSION OVER 100KM OF STANDARD FIBRE AT 60GHZ USING A MASTER/SLAVE INJECTION-LOCKED DFB LASER SOURCE" METAL FINISHING, ELSEVIER, NEW YORK, NY, US, Bd. 94, Nr. 9, 26. September 1996 (1996-09-26), Seiten 1895-1897, XP000637896 ISSN: 0026-0576

## Beschreibung

Die Erfindung betrifft ein Verfahren zum Senden von optisch übertragenen Daten über eine Funkantenne mit den Schritten:
- Modulieren eines Trägersignals abhängig von zu übertragenden Daten oder abhängig von einem zu übertragenden Datensignal unter Erzeugen eines modulierten Trägersignals,
- Übertragen des modulierten Trägersignals über eine optische Faserleitung, und
- nach dem Übertragen über die optische Faserleitung Senden der Daten über eine Funkantenne.

Solche Verfahren werden auch als "optical radio" bezeichnet und beispielsweise bei teuren Monomode-Glasfasern angewendet. Mit anderen Worten ausgedrückt, handelt es sich insbesondere um Verfahren zur optischen Übertragung von Radiofrequenzsignalen zu einer Funkantenne. Ein solches System ist aus

EP 1357683 bekannt.

Es ist Aufgabe der Erfindung, ein einfaches Verfahren anzugeben, das insbesondere auch bei einer langen Glasfaser, bei preiswerten Polymerfasern und/oder bei großen Trägerfrequenzen anwendbar ist. Außerdem soll eine Vorrichtung angegeben werden, die insbesondere zur Ausführung dieses Verfahrens geeignet ist.

Die auf das Verfahren bezogene Aufgabe wird durch ein Verfahren mit den im Patentanspruch angegebenen Verfahrensschritten gelöst. Weiterbildungen sind in den Unteransprüchen angegeben.

Bei dem erfindungsgemäßen Verfahren werden zusätzlich zu den eingangs genannten Verfahrensschritten die folgenden Verfahrensschritte ausgeführt:
- Demodulieren des übertragenen modulierten Trägersignals unter Erzeugen von empfangenen Daten oder eines empfangenen Datensignals, die bzw. das dann über die Funkantenne gesendet werden sollen bzw. wird, so dass auch von einem Regenerieren der über die Funkantenne zu sendenden Daten gesprochen werden kann,
- aus dem übertragenen modulierten Trägersignal Erzeugen eines Hilfsträgersignals,
- Modulieren des Hilfsträgersignals abhängig von den empfangenen Daten oder dem empfangenen Datensignal, und
- Senden des modulierten Hilfsträgersignals über eine Funkantenne.

Die Erfindung geht von der Überlegung aus, dass es Anwendungen gibt, bei denen die Übertragung einer Trägerfrequenz im Gigahertzbereich, z.B. größer als 20 Gigahertz, wünschenswert ist, da beispielsweise bei solchen Frequenzen Frequenzgeneratoren nur teuer und schwierig zu realisieren sind. Insbesondere ist es schwierig, diese Generatoren rauscharm zu realisieren, insbesondere Phasenrauscharm. Andererseits führt jedoch eine Übertragung der Daten im Radiofrequenzband, d.h. bei den hohen Frequenzen, dazu, dass die Übertragungsstrecke über die optische Faserleitung ohne zusätzliche Maßnahmen, wie z.B. Regeneratoren, aufgrund der Dämpfung und der Dispersion in der optischen Faserleitung begrenzt ist.

Deshalb wird bei dem erfindungsgemäßen Verfahren das übertragene modulierte Trägersignal unter Erzeugen der empfangenen Daten oder des empfangenen Datensignals demoduliert. Auch wird aus dem übertragenen modulierten Trägersignal ein regeneriertes Hilfsträgersignal erzeugt, das vorzugsweise die gleiche Frequenz wie das modulierte Trägersignal hat oder ein Vielfaches der Frequenz des Trägersignals, beispielsweise ein ganzzahliges Vielfaches. Nach einer Modulierung des Hilfsträgersignals abhängig von den empfangenen Daten oder dem empfangenen Datensignal ist dann die Übertragung über eine Funkantenne und über eine Funkübertragungsstrecke trotz der dabei auftretenden Schwächung und/oder Verzerrung des Signals mit einer geringen Fehlerrate und insbesondere in einem passiven Antennenkopf möglich. Bei einer Ausgestaltung werden voneinander verschiedene Modulationsverfahren für die Modulation des Trägersignals und die Modulation des Hilfsträgersignals verwendet. Alternativ werden jedoch auch die gleichen Modulationsverfahren verwendet.

Das erfindungsgemäße Verfahren wird insbesondere bei so genannten MIMO (Multiple Input Multiple Output) Anwendungen verwendet werden oder bei gerichteten Radio-Ausstrahlungen verwendet, insbesondere in so genannten Piko-Zellen, d.h. in Funkzellen mit einem Durchmesser kleiner als 35 Meter, aber auch beim Betreiben von Basisstationen eines Mobilfunkdatenübertragungsnetzes.

Bei einer Weiterbildung des erfindungsgemäßen Verfahrens wird das Trägersignal gemäß einer Amplitudenmodulation abhängig von den zu übertragenden Daten oder abhängig von dem zu übertragenden Datensignal moduliert. Diese Weiterbildung geht von der Überlegung aus, dass aufgrund der Dämpfung der optischen Faserleitung bzw. aufgrund der Dispersionen in den optischen Faserleitungen Phasenmodulationen, z.B. PSK (Phase Shift Keying) oder QAM (Quadratur Amplitude Modulation) nur vergleichsweise kurze Übertragungsstrecken ermöglichen, insbesondere bei Trägersignalen mit einer sehr hohen Frequenz, beispielsweise größer als 20 Gigahertz. Dagegen wird die Amplitudenmodulation nur durch die Dämpfung beeinträchtigt, so dass auch größere Übertragungsstrecken bzw. "preiswertere" optische Faserleitungen verwendet werden können.

Bei einer Weiterbildung bleibt bei der Amplitudenmodulation die Differenz eines Spitzenwertes und des folgenden Minimalwertes in dem modulierten Trägersignal jeweils abgesehen von Wechseln aufgrund voneinander verschiedener Datenwerte gleich. Somit wird beispielsweise sowohl der Spitzenwert als auch der Minimalwert des Trägersignals abhängig von den zu übertragenden Daten geändert. Auf diese Weise lässt sich das Trägersignal auf einfache Art modulieren.

Bei einer alternativen Weiterbildung ist bei der Amplitudenmodulation die Differenz eines Spitzenwertes und des folgenden Minimalwertes in dem modulierten Trägersignal von dem Wert des zu übertragenden Datums abhängig, insbesondere auch zwischen Wechseln des zu übertragenden Datenwertes. Beispielsweise wird nur der Spitzenwert abhängig von den zu übertragenden Daten geändert, wobei der Minimalwert jedoch beibehalten wird. Alternativ kann auch umgekehrt vorgegangen werden. Bei diesen Weiterbildungen ist der Modulationsgrad des Trägersignals besonders groß.

Bei einer nächsten Weiterbildung des erfindungsgemäßen Verfahrens wird das Hilfsträgersignals aus dem empfangenen Hauptträgersignal unter Verwendung einer Nachlaufregelung erzeugt, die auch als PLL (Phase Locked Loop) bezeichnet wird. Die Nachlaufregelung ermöglicht das Erzeugen eines Hilfsträgersignals auch bei einem stark gestörten empfangenen Trägersignal. Außerdem kann mit einfachen Mitteln Phasengleichheit bzw. eine starre Phasenbeziehung zwischen beiden Signalen erzeugt werden. Diese Phasengleichheit ist insbesondere bei MIMO-Anwendungen erforderlich. Bei Ausgestaltungen führt die Nachlaufregelung beispielsweise auch eine Frequenzerhöhung durch, insbesondere eine Frequenzverdoppelung oder eine Frequenzverdreifachung.

Bei einer nächsten Weiterbildung des erfindungsgemäßen Verfahrens wird das Hilfsträgersignal unter Verwendung einer Filtereinheit erzeugt, insbesondere unter Verwendung einer im Vergleich zur Frequenz des Hilfsträgersignals schmalbandigen Filtereinheit, wobei schmalbandig bedeutet, dass die Filtereinheit beispielsweise nur Signale mit einer Dämpfung von kleiner als 3 dB bei Frequenzen in einem Frequenzbereich durchlässt, der um einen Wert kleiner als 5 Prozent unterhalb der Frequenz des Trägersignals liegt und der um höchstens 5 Prozent über der Frequenz des Trägersignals liegt. Die Filtereinheit ist insbesondere ein Bandpassfilter, z.B. ein Filter mit geringer Phasenverschiebung im Durchlassband wie ein Tschebyschefffilter.

Bei einer nächsten Weiterbildung wird das Verfahren zum Betreiben mehrerer Antennen verwendet, die gleichzeitig Daten über mehrere Funkübertragungsstrecken zu einem Endgerät übertragen. Diese Anwendungen werden auch als MIMO (Multiple Input Multiple Output) bezeichnet und gewährleisten auch bei sehr schwachen Signalen, dass eine fehlerfreie Datenübertragung zu einem Endgerät durchgeführt werden kann.

Bei einer anderen Weiterbildung ist die optische Faserleitung eine Polymerfaserleitung, insbesondere aus organischen Polymeren, beispielsweise eine PMMA-Leitung (Polymethylmethacrylat) oder eine andere Polymerleitung. Polymere sind Makromoleküle mit Molmassen von bspw. größer als 10⁴ gmol⁻¹. Diese Faserleitungen sind beispielsweise Gradientenfasern und im Vergleich zu Glasfasern, insbesondere Monomodeglasfasern erheblich preiswerter. Jedoch ist die Dämpfung und Dispersion dieser Faserleitungen auch erheblich größer im Vergleich zu Glasfaserleitungen, insbesondere zu Monomodeglasfaserleitungen. Jedoch lassen sich die Polymerfaserleitungen aufgrund des erfindungsgemäßen Verfahrens auch bei Übertragungsstrecken größer 50 m und Frequenzen des Trägersignals größer als 20 Gigahertz verwenden.

Bei einer nächsten Weiterbildung des erfindungsgemäßen Verfahrens wird über die Sendeantenne oder über eine zusätzliche Empfangsantenne auch ein Funksignal empfangen. Der Hilfsträger wird zum Demodulieren des empfangenen Funksignals verwendet. Damit lässt sich eine bidirektionale Datenübertragung durchführen. Insbesondere lassen sich auch für den Rückweg Polymerfasern bei hohen Trägersignalfrequenzen von größer 20 Gigahertz und Leitungslängen über 50 Meter oder 500 Meter verwenden.

Bei einer anderen Weiterbildung wird der Hilfsträger zum Modulieren mit zurück zu übertragenden Daten oder mit einem zurück zu übertragenden Datensignal verwendet. Der moduliert Hilfsträger wird über die optische Faserleitung oder über eine weitere optische Faserleitung gesendet. Beide optische Faserleitungen haben insbesondere gleiche physikalische Eigenschaften. Wird nur eine optische Faserleitung verwendet, so werden Multiplexverfahren eingesetzt, beispielsweise Zeitmultiplex oder Frequenzmultiplex.

Die Erfindung betrifft außerdem eine Vorrichtung, insbesondere einen optischen Funk-Antennenkopf. Der Antennenkopf enthält eine optisch/elektrische Wandlereinheit, z.B. eine strahlungsabsorbierende Diode, z.B. eine pn-Diode, eine pin-Diode oder eine so genannte Avalanchediode. Außerdem enthält der Antennenkopf eine der Wandlereinheit nachgeschaltete erste Trenneinheit, beispielsweise einen Tiefpass, der die übertragenen Datensignale hindurch lässt. Weiterhin enthält der Antennenkopf eine zweite Trenneinheit, die Signale eines Trägersignals überträgt, jedoch die Datensignale stark dämpft. Den zwei Trenneinheiten ist eine Signalmischeinheit oder Modulatoreinheit nachgeschaltet, die zum Mischen oder Modulieren der von der ersten Trenneinheit bzw. der zweiten Trenneinheit kommenden Signale dient.

Bereits ohne weitere Zwischeneinheiten zwischen den Trenneinheiten und der Mischeinheit bzw. Modulatoreinheit lässt sich eine Signalaufbereitung in dem Antennenkopf durchführen, die die Verwendung von großen Übertragungsstrecken bzw. von "preisgünstigen" Polymerfasern ermöglicht. Insbesondere lässt sich der Antennenkopf auch passiv, d.h. ohne zusätzliche Spannungsversorgung aufbauen.

Bei einer nächsten Weiterbildung ist jedoch zwischen der ersten Trenneinheit und der Mischeinheit eine Modulationseinheit angeordnet, insbesondere eine Modulationseinheit mit digitalem Signalprozessor. Die Modulationseinheit erzeugt ein moduliertes Datensignal in einem Basisband. In der Mischeinheit wird das Basisband dann aufgrund der Mischung in den hohen Frequenzbereich verschoben. Somit kann die Modulationseinheit einfacher aufgebaut werden im Vergleich zu dem Fall, bei dem das hochfrequente Trägersignal direkt moduliert wird.

Bei einer nächsten Weiterbildung enthält der Antennenkopf eine Nachlaufregeleinheit, die der zweiten Trenneinheit nachgeschaltet und der Mischeinheit vorgeschaltet ist. Die Nachlaufregeleinheit bzw. PLL ermöglicht eine einfache Rekonstruktion des Trägersignals, beispielsweise auch mit einer Frequenzerhöhung.

Bei einer nächsten Weiterbildung enthält der Antennenkopf eine der Mischeinheit nachgeschaltete Funkantenne. Die Funkantenne ist bei einer anderen Weiterbildung für eine Sendefrequenz größer als 20 Gigahertz oder sogar größer als 50 Gigahertz ausgelegt.

Bei einer nächsten Weiterbildung enthält die Vorrichtung eine optische Faserleitung, die zu der optisch/elektrischen Wandlereinheit führt. Die optische Faserleitung ist insbesondere eine Polymerfaserleitung mit einer Länge größer als 50 m bei Frequenzen eines Trägersignals, das über die Faserleitung übertragen wird, von größer als 20 Gigahertz.

Bei einer anderen Weiterbildung dient die Funkantenne auch als Empfangsantenne. Alternativ gibt es eine zusätzliche Empfangsantenne. Der Empfangsantenne ist eine Demodulatoreinheit nachgeschaltet, damit eine bidirektionale Datenübertragung durchgeführt werden kann.

Im Folgenden werden Ausführungsbeispiele der Erfindung anhand der beiliegenden Zeichnungen erläutert. Darin zeigen:
- Figur 1: einen Prinzipschaltplan eines Sendeteils eines An- tennenkopfes,
- Figur 2: einen Prinzipschaltplan eines Empfangsteils des An- tennenkopfes,
- Figur 3: ein über eine Polymerfaser zu übertragendes modu- liertes Trägersignal, und
- Figur 4: ein weiteres über eine Polymerfaser zu übertragen- des moduliertes Trägersignal.

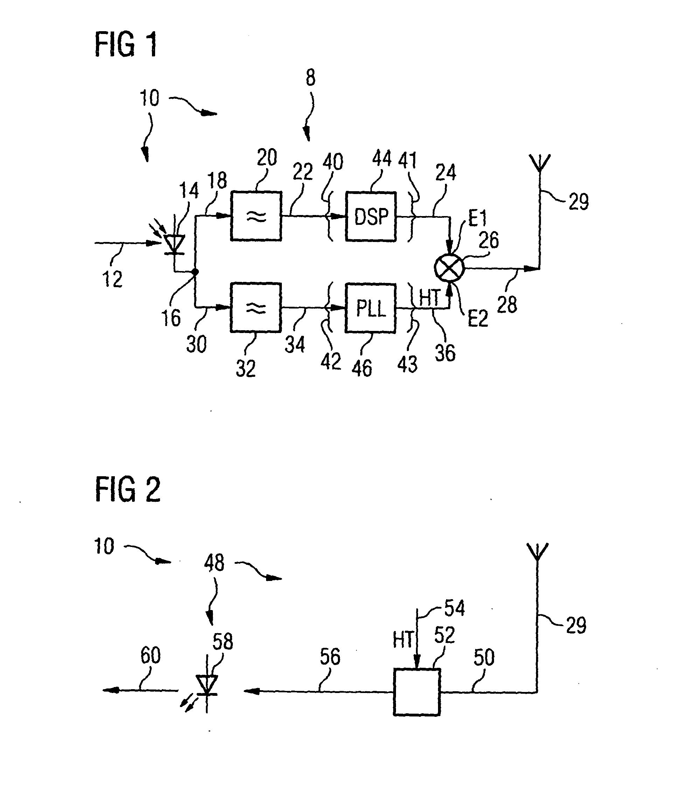

Figur 1 zeigt einen Prinzipschaltplan eines Sendeteils 8 eines Antennenkopfes 10. Der Antennenkopf 10 ist an eine Polymerfaser 12 angeschlossen, die zu einer optischen Empfangsdiode 14 führt. Ein Anschluss der Empfangsdiode 14 des Antennenkopfes 10 führt zu einer Verzweigung 16. Von der Verzweigung 16 führt eine elektrisch leitfähige Verbindung 18 zu einem Basisbandfilter 20, das beispielsweise ein Tiefpass ist. Vom Ausgang des Basisbandfilters 20 führt eine elektrisch leitfähige Verbindung 22 zu einer Signalprozessoreinheit 44, die bspw. einen digitalen Signalprozessor (DSP) enthält. Eine elektrisch leitfähige Verbindung führt von einem Ausgang der Signalprozessoreinheit 44 zu einem Eingang E1 einer Mischeinheit 26. Vom Ausgang der Mischeinheit 26 führt eine elektrisch leitfähige Verbindung 28 zu einer Antenne 29.

Von der Verzweigung 16 führt außerdem eine elektrisch leitfähige Verbindung 30 zu einem Trägerfrequenzfilter 32, das um eine Trägerfrequenz herum eine schmalbandige Filterung durchführt. Vom Ausgang des Trägerfrequenzfilters 32 führt eine elektrisch leitfähige Verbindung zu einer PLL-Schaltung 46, die beispielsweise einen lokalen Oszillator enthält, der mit der Trägerfrequenz schwingt, wobei bspw. die Genauigkeit nicht so hoch ist wie die Genauigkeit eines Oszillators, der zum Erzeugen der Trägerfrequenz verwendet wird, die an dem nicht dargestellten Ende der Polymerfaserleitung 12 verwendet wird. Vom Ausgang der PLL-Schaltung 46 führt eine elektrisch leitfähige Verbindung zu einem Eingang E2 der Mischeinheit 26. Auf der elektrischen Verbindung 36 wird ein Hilfsträgersignal HT übertragen.

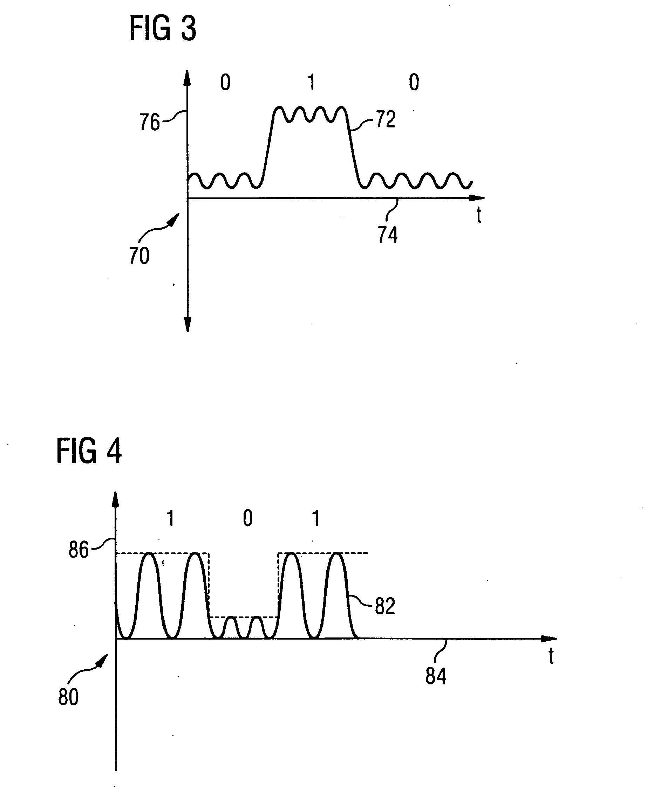

Beispielsweise wird über die Polymerfaserleitung 12 ein amplitudenmoduliertes Trägersignal übertragen, wie es unten beispielsweise anhand der Figur 3 bzw. Figur 4 erläutert wird. Nach der optisch/elektrischen Wandlung wird aus dem modulierten Trägersignal ein empfangenes Datensignal erzeugt, das beispielsweise in dem Tiefpass 20 schon demoduliert wird. Jedoch kann die Demodulation auch mit der Signalprozessoreinheit 44 durchgeführt werden. Anschließend wird eine für die Funkübertragung geeignete Modulation in der Signalprozessoreinheit 44 durchgeführt, insbesondere eine PSK-Modulation (Phase Shift Keying) oder eine QAM-Modulation (Quadratur Amplitude Modulation). Das Filter 32 filtert das Trägerfrequenzsignal heraus, das jedoch durch die Übertragung auf der Polymerfaser 12 stark gestört ist. Die PLL-Schaltung 46 erzeugt aus diesem gestörten Trägersignal ein Hilfsträgersignal HT, das als regeneriertes Trägersignal angesehen werden kann und insbesondere die gleiche Phasenlage wie das ursprüngliche Trägersignal hat, insbesondere ist das Hilfsträgersignal HT phasenstarr zu dem ursprünglichen bzw. ungestörten Trägersignal. Nach dem Mischen des Hilfsträgersignals HT mit dem durch die Signalprozessoreinheit 44 erzeugten modulierten Datensignal entsteht ein Funksignal, das über die Antenne 29 abgestrahlt wird, insbesondere im Zusammenhang mit einer MIMO-Anwendung.

Bei anderen Ausführungsbeispielen ist der Antennenkopf als passiver Antennenkopf aufgebaut, d.h. ohne die Signalprozessoreinheit 44 und ohne die PLL-Schaltung 46, siehe Klammern 40 bis 43. Bei einem nächsten Ausführungsbeispiel gibt es nur die Signalprozessoreinheit 44, aber nicht die PLL-Schaltung 46. In diesem Fall reicht die Filterung durch das Trägerfilter 32 aus, um das Trägersignal zu regenerieren. Bei einer alternativen Weiterbildung wird jedoch die PLL-Schaltung 46 verwendet, jedoch nicht die Signalprozessoreinheit 44. In diesem Fall arbeitet die Mischeinheit 26 als Modulatoreinheit, die beispielsweise wiederum eine Amplitudenmodulation durchführt.

Figur 2 zeigt einen Prinzipschaltplan eines Empfangsteils 48 des Antennenkopfes 10. Die Antenne 29 bzw. eine zusätzliche Empfangsantenne ist über eine elektrisch leitfähige Verbindung 50 mit einem Demodulator bzw. einer Signalmischeinheit 52 verbunden. Der Demodulatoreinheit 52 wird auch das regenerierte Hilfsträgersignal HT über eine elektrische Verbindung 54 zugeführt. Vom Ausgang des Demodulators 52 führt eine elektrisch leitfähige Verbindung zu einem Anschluss einer optisch emittierenden Diode, beispielsweise einer Laserdiode oder einer Leuchtdiode. An die Diode 58 ist eine Polymerfaser 60 angeschlossen. Alternativ ist eine Glasfaser angeschlossen. Somit lässt sich das regenerierte Hilfsträgersignal auch für den Empfang von Funkdaten verwenden, die dann über eine Polymerfaser 60 übertragen werden.

Der Demodulator 52 enthält bspw. außerdem einen Modulator, der ein amplitudenmoduliertes Trägersignal erzeugt, wie es unten anhand der Figur 3 bzw. 4 erläutert wird. Diese amplitudenmodulierten Signale sind insbesondere für die Übertragung über Polymerfasern bzw. über sehr lange Glasfasern geeignet. Auch das Empfangsteil 48 lässt sich passiv aufbauen. Anstelle der Diode 58 lässt sich bspw. auch ein Mach-Zehender-Interferometer, ein Kristall verwenden, der seine optischen Eigenschaften abhängig von einer Spannung ändert, bzw. ein so genannter Elektro-Absorptions-Modulator (EAM), der auf dem Franz-Keldysh-Effekt beruht.

Figur 3 zeigt in einem Koordinatensystem 70 einen Signalkurve 72, die ein über die Polymerfaser 12 zu übertragendes moduliertes Trägersignal zeigt. Das Koordinatensystem 70 hat eine horizontale x-Achse, auf der die Zeit t dargestellt ist. Eine vertikale y-Achse 76 dient zur Darstellung der Intensität bzw. der Leistung der übertragenen optischen Strahlung. Wie in Figur 3 dargestellt ist, wird zum Übertragen des Datenwertes Null das Trägersignal so moduliert, dass es einen kleinen Spitzenwert und einen kleinen Minimalwert hat. Beim Übertragen des Datenwertes Eins werden dagegen ein größerer Spitzenwert und ein größerer Minimalwert verwendet. Die Differenz zwischen Spitzenwert und Minimalwert ist größer als Null und beim Datenwert Null bspw. gleich groß wie beim Datenwert Eins. Mit anderen Worten ausgedrückt, wird der Mittelwert des sich periodisch ändernden Trägersignals bei gleich bleibender Amplitude geändert.

Figur 4 zeigt in einem Koordinatensystem 80 eine Signalkurve 82 eines über die Polymerfaser 12 zu übertragenden modulierten Trägersignals gemäß einem zweiten Ausführungsbeispiel. Das Koordinatensystem 80 hat eine horizontale x-Achse 84, auf der die Zeit t aufgetragen ist. Auf einer vertikalen y-Achse 86 ist die Intensität bzw. die Leistung der Strahlung aufgetragen, die bspw. durch einen optischen Sender erzeugt wird.

Wie aus Figur 4 ersichtlich ist, wird zur Übertragung des Datenwertes Eins das bspw. sinus- bzw. kosinusförmige Trägersignal so moduliert, dass es einen großen Spitzenwert und einen kleinen Minimalwert hat, insbesondere einen Minimalwert Null. Bei der Übertragung des Datenwertes Null wird das Trägersignal dagegen so moduliert, dass es einen im Vergleich zu dem Spitzenwert bei dem Datenwert Null kleineren Spitzenwert hat, wobei der Minimalwert jedoch weiter den Wert Null hat. Damit verändert sich der Amplitudenhub des Trägersignals abhängig von dem zu übertragenden Datenwert.

Bei anderen Ausführungsbeispielen werden andere Arten der Amplitudenmodulation eingesetzt. Beispielsweise lassen sich auch die Signalformen für die Datenwerte Null und Eins vertauschen. Oder es wird ein Minimalwert verschieden von Null verwendet.

Zusammenfassend gilt, dass mit dem Oberbegriff "optical radio" Technologien bezeichnet werden, bei denen ein Teil der zu übertragenden Signale entweder im Basisband oder im Radiofrequenzband über eine optische Faser, z.B. eine Glasfaser oder Polymerfaser, übertragen wird. Bei den beschriebenen Ausführungsbeispielen geht es um die Übertragung der Radiofrequenzdaten über eine optische Strecke zur Antenne über preisgünstige Polymerfasern. Bspw. für zukünftige Wireless-Datenübertragungstechnologien sind sehr hohe Frequenzen von bis zu 60 Gigahertz erforderlich, beispielsweise bei WLAN-Anwendungen oder in zukünftigen Mobilfunkdatenübertragungsnetzen. Preisgünstige Multimode-Polymerfasern haben aber eine sehr hohe modale Dispersion, so dass bei einer Frequenz von bspw. 60 Gigahertz die maximale Übertragungsfläche für Daten nur wenige Zentimeter beträgt, z.B. weniger als 30 Zentimeter. Somit ist es nicht möglich, über eine solche Faser einen Antennenkopf anzubinden, wenn das Licht mit dem RF-Datensignal (Radio Frequency) moduliert ist. Andererseits ist aber eine Übertragung der bspw. 60 Gigahertz Trägerfrequenz wünschenswert, da bei solchen Frequenzen Frequenzgeneratoren nur teuer und schwierig, insbesondere nicht phasenrauscharm zu realisieren sind.

Insbesondere für MIMO-Anwendungen oder gerichtete Radio-Ausstrahlungen ist jedoch eine phasenstarre Beziehung von mehreren Antennen notwendig, die sich nur sehr aufwendig realisieren lässt, wenn jeder Antennenkopf einen eigenen Oszillator bekommt. In den Ausführungsbeispielen werden die Daten auf dem Basisband durch die optische Faser übertragen und die Trägerfrequenz wird getrennt davon übertragen. Hierbei wird ausgenutzt, dass sich aufgrund der starken Dispersion zwar keine Daten mit beispielsweise 60 Gigahertz mehr übertragen lassen, dass aber, wenn bspw. ein 60 Gigahertz Trägersignal übertragen wird, dieses sich am Ende der Faser nach einer schmalbandigen Filterung phasenstarr rekonstruieren lässt. Die zu übertragenden Daten haben beispielsweise nur eine vergleichsweise geringe Datenrate von einigen 10 Megabits je Sekunde, z.B. kleiner als 100 Megabit je Sekunde, und lassen sich auch über stark dispersive Medien über einige 100 m (Meter) übertragen.

Der Antennenkopf hat bei einem Ausführungsbeispiel einen solchen Aufbau, dass sich an seinem optischen Eingang eine Fotodiode befindet, deren elektrisches Signal in zwei Teile aufgeteilt wird. Der eine Teil wird über einen Tiefpass gefiltert und liefert die zu sendende Basisbandinformation. Der zweite Teil wird über ein schmalbandiges Filter bei der Trägerfrequenz gefiltert und erzeugt den Träger. Ein Radiofrequenz-Mischer erzeugt nun aus dem Basisbandsignal und dem Trägersignal das abzustrahlende Signal.

Wenn die abzustrahlenden Radiofrequenzleistungen nur sehr klein sind, kann der ganze Antennenkopf vollständig passiv, d.h. ohne zusätzliche elektrische Spannungsversorgung, ausgelegt werden. Der aus der Fotodiode kommende Strom liefert die benötigte Energie. Das Basisband-Tiefpassfilter, das Träger-Schmalbandfilter und der Mischer sind in diesem Fall passive Bauelemente.

Für den Rückkanal wird insbesondere das vorhandene Trägersignal genutzt, um das empfangene RF-Signal in das Basisband zu transformieren. Mit diesem Basisbandsignal wird der Rückkanal moduliert. Auch dies wird bei einem Ausführungsbeispiel vollständig passiv durchgeführt.

Durch die genannten Maßnahmen wird die Anwendung von preisgünstigen Multimode-Polymerfasern für abgesetzte Antenneneinheiten möglich, insbesondere für passiv arbeitende Antenneneinheiten aber auch für aktiv arbeitende Antenneneinheiten.

Bei anderen Ausführungsbeispielen wird jedoch kein hochstufiges Modulationsverfahren für die Übertragung über die optische Faserleitung verwendet, wie z.B. QAM64. Hochstufige Modulationsverfahren lassen sich nicht störungsfrei über hochdispersive Medien übertragen. Deshalb werden bei diesen Ausfuhrungsbeispielen die Daten im Basisband mittels einfacher Modulationsverfahren übertragen, z.B. Ein-Aus-Schalten bzw. On-Off-Keying, und das auszusendende Funksignal wird im Antennenkopf digital erzeugt, siehe Signalprozessoreinheit 44.

Der Antennenkopf ist wiederum so aufgebaut, dass sich an seinem optischen Eingang eine Fotodiode befindet, deren elektrisches Signal in zwei Teile aufgeteilt wird. Der eine Teil wird über einen Tiefpass gefiltert und liefert die zu sendenden Basisbandinformation. Der zweite Teil wird über ein schmalbandiges Filter bei der Trägerfrequenz gefiltert und erzeugt den Träger.

Im Antennenkopf selbst befindet sich ein Signalprozessor, der die zu sendenden Daten in das gewünschte Modulationsformat umsetzt. Die modulierten Basisbanddaten werden nun mit der rekonstruierten Radiofrequenzträgerfrequenz gemischt und über eine Antenne abgestrahlt.

Für den Rückkanal wird wiederum das vorhandene Trägersignal genutzt, um das empfangene RF-Signal (radio frequency) zu demodulieren und in das Basisband zu transformieren. Mit diesem Basisbandsignal wird der Rückkanal moduliert, z.B. mittels On-Off-keying. Auch durch diese Maßnahme wird die Anwendung von preisgünstigen Multimode-Polymerfasern für abgesetzte Antennen ermöglicht.

### Bezugszeichenliste

- 8: Sendeteil
- 10: Antennenkopf
- 12: Polymerfaser
- 14: optische Empfangsdiode
- 16: Verzweigung
- 18: Verbindung
- 20: Basisbandfilter
- 22, 24: Verbindung
- 26: Signalmischeinheit
- E1, E2: Eingang
- 28: Ausgangsverbindung
- 29: Antenne
- 30: Verbindung
- 32: Trägerfrequenzfilter
- 34, 36: Verbindung
- 40 bis 43: Klammer
- 44: Signalprozessoreinheit
- 46: PLL-Schaltung
- 48: Empfangsteil
- 50: Verbindung
- 52: Demodulator
- 54, 56: Verbindung
- 58: optische Sendediode
- 60: Polymerfaser
- 70, 80: Koordinatensystem
- 72, 82: Signalkurve
- 74, 84: x-Achse
- 76, 86: y-Achse
- HT: Hilfsträgersignal

## Patentansprüche

1. Verfahren zum Senden von optisch übertragenen Daten über eine Funkantenne (29), mit den Schritten: Modulieren eines Trägersignals abhängig von zu übertragenden Daten oder abhängig von einem zu übertragenden Datensignal unter Erzeugen eines modulierten Trägersignals (72, 82), Übertragen des modulierten Trägersignals (72, 82) über eine optische Faserleitung (12), Demodulieren des übertragenen modulierten Trägersignals unter Erzeugen von empfangenen Daten oder eines empfangenen Datensignals, aus dem übertragenen modulierten Trägersignal Erzeugen eines Hilfsträgersignals (HT), Modulieren des Hilfsträgersignals (HT) abhängig von den empfangenen Daten oder dem empfangenen Datensignal, Senden des modulierten Hilfsträgersignals (HT) über eine Funkantenne (29).

2. Verfahren nach Anspruch 1, **dadurch gekennzeichnet, dass** das Trägersignal gemäss einer Amplitudenmodulation abhängig von den zu übertragenden Daten oder abhängig von dem zu übertragenden Datensignal moduliert wird.

3. Verfahren nach Anspruch 2, **dadurch gekennzeichnet, dass** die Differenz eines Spitzenwertes und des folgenden Minimalwertes in dem modulierten Trägersignal (72) abgesehen von Wechseln aufgrund voneinander verschiedener Datenwerte gleich bleibt.

4. Verfahren nach Anspruch 2, **dadurch gekennzeichnet, dass** die Differenz eines Spitzenwertes und des folgenden Minimalwertes in dem modulierten Trägersignal (82) von dem Wert des zu übertragenden Datums abhängt.

5. Verfahren nach einem der vorhergehenden Ansprüche, **gekennzeichnet durch** den Schritt: Erzeugen des Hilfsträgersignals (HT) aus dem empfangenen Trägersignal unter Verwenden einer Nachlaufregelung (46).

6. Verfahren nach einem der vorhergehenden Ansprüche, **gekennzeichnet durch** den Schritt: Erzeugen des Hilfsträgersignals unter Verwendung einer Filtereinheit (32).

7. Verfahren nach einem der vorhergehenden Ansprüche, **dadurch gekennzeichnet, dass** das Verfahren zum Betreiben mehrerer Antennen (29) verwendet wird, die gleichzeitig Daten über mehrere Funkübertragungsstrecken zu einem Endgerät übertragen.

8. Verfahren nach einem der vorhergehenden Ansprüche, **dadurch gekennzeichnet, dass** die optische Faserleitung eine Polymerfaserleitung ist, insbesondere aus organischen Polymeren.

9. Verfahren nach einem der vorhergehenden Ansprüche, **dadurch gekennzeichnet, dass** als optische Faserleitung (12) eine Multimode-Faser oder eine Gradienten-Indexfaser verwendet wird.

10. Verfahren nach einem der vorhergehenden Ansprüche, **dadurch gekennzeichnet, dass** eine optische Faserleitung (12) verwendet wird, die mindestens 50 Meter oder mindestens 100 Meter lang ist, und/oder dass ein Trägersignal mit einer Frequenz grösser als 20 Gigahertz oder grösser als 50 Gigahertz verwendet wird.

11. Verfahren nach einem der vorhergehenden Ansprüche, **gekennzeichnet durch** die Schritte: Empfangen eines Funksignals über eine Empfangsantenne (29), Verwenden des Hilfsträgersignals (HT) zum Demodulieren des empfangenen Funksignals.

12. Verfahren nach einem der vorhergehenden Ansprüche, **gekennzeichnet durch** die Schritte: Verwenden des Hilfsträgersignals (HT) zum Modulieren (52) mit zurück zu übertragenden Daten oder mit einem zurück zu übertragenden Datensignal, Übertragen des modulierten Hilfsträgersignals (HT) über die optische Faserleitung (12) oder über eine weitere optische Faserleitung.

13. Vorrichtung (10), mit einer optisch/elektrischen Wandlereinheit (14), mit einer der Wandlereinheit (14) nachgeschalteten ersten Trenneinheit (20), die Signale in einem Basisbandfrequenzbereich besser überträgt als Signale mit einer Frequenz ausserhalb des Basisfrequenzbereiches, mit einer der Wandlereinheit (14) nachgeschalteten zweiten Trenneinheit (32), die Signale in einem Hauptfrequenzbereich besser als Signale in dem Basisbandfrequenzbereich überträgt, wobei die untere Grenze des Hauptfrequenzbereichs grösser als die obere Grenze des Basisbandfrequenzbereiches ist, mit einer der ersten Trenneinheit (20) und der zweiten Trenneinheit (32) nachgeschalteten Signalmischeinheit (26) oder Modulatoreinheit, die einen ersten Eingang (E1) hat, an dem von der ersten Trenneinheit (20) kommende Signale eintreffen, und die einen zweiten Eingang (E2) hat, an dem von der zweiten Trenneinheit (32) kommende Signale eintreffen und die an einem Ausgang ein Signal erzeugt, das eine Mischung oder Modulation der Signale an dem ersten Eingang (E1) und dem zweiten Eingang (E2) ist.

14. Vorrichtung (10) nach Anspruch 13, **gekennzeichnet durch** eine Modulationseinheit (44), die der ersten Trenneinheit (20) nachgeschaltet und dem ersten Eingang (E1) der Mischeinheit (26) vorgeschaltet ist.

15. Vorrichtung (10) nach Anspruch 13 oder 14, **gekennzeichnet durch** eine Nachlaufregeleinheit (46), die der zweiten Trenneinheit (32) nachgeschaltet und dem zweiten Eingang (E2) der Mischeinheit (26) oder Modulatoreinheit vorgeschaltet ist.

## Claims

1. Method for sending optically transmitted data via a radio antenna (29), having the following steps: a carrier signal is modulated on the basis of data to be transmitted or on the basis of a data signal to be transmitted to produce a modulated carrier signal (72, 82), the modulated carrier signal (72, 82) is transmitted via an optical fibre line (12), the transmitted modulated carrier signal is demodulated to produce received data or a received data signal, the transmitted modulated carrier signal is used to produce an auxiliary carrier signal (HT), the auxiliary carrier signal (HT) is modulated on the basis of the received data or the received data signal, and the modulated auxiliary carrier signal (HT) is sent via a radio antenna (29).

2. Method according to Claim 1, **characterized in that** the carrier signal is modulated in accordance with amplitude modulation on the basis of the data to be transmitted or on the basis of the data signal to be transmitted.

3. Method according to Claim 2, **characterized in that** the difference between a peak value and the subsequent minimum value in the modulated carrier signal (72) remains the same apart from changes on account of different data values.

4. Method according to Claim 2, **characterized in that** the difference between a peak value and the subsequent minimum value in the modulated carrier signal (82) is dependent on the value of the data item to be transmitted.

5. Method according to one of the preceding claims, **characterized by** the following step: an auxiliary carrier signal (HT) is produced from the received carrier signal using a servocontrol (46).

6. Method according to one of the preceding claims, **characterized by** the following step: the auxiliary carrier signal is produced using a filter unit (32).

7. Method according to one of the preceding claims, **characterized in that** the method is used to operate a plurality of antennas (29) which simultaneously transmit data to a terminal via a plurality of radio transmission links.

8. Method according to one of the preceding claims, **characterized in that** the optical fibre line is a polymer fibre line, particularly comprising organic polymers.

9. Method according to one of the preceding claims, **characterized in that** the optical fibre line (12) used is a multimode fibre or a gradient index fibre.

10. Method according to one of the preceding claims, **characterized in that** an optical fibre line (12) is used which is at least 50 metres or at least 100 metres in length, and/or **in that** a carrier signal at a frequency greater than 20 gigahertz or greater than 50 gigahertz is used.

11. Method according to one of the preceding claims, **characterized by** the following steps: a radio signal is received via a reception antenna (29), and the auxiliary carrier signal (HT) is used to demodulate the received radio signal.

12. Method according to one of the preceding claims, **characterized by** the following steps: the auxiliary carrier signal (HT) is used for modulation (52) with data that are to be transmitted back or with a data signal that is to be transmitted back, and the modulated auxiliary carrier signal (HT) is transmitted via the optical fibre line (12) or via a further optical fibre line.

13. Apparatus (10), having an optoelectrical transducer unit (14), having a first separating unit (20) which is connected downstream of the transducer unit (14) and which transmits signals in a baseband frequency range better than signals at a frequency outside the baseband frequency range, having a second separating unit (32) which is connected downstream of the transducer unit (14) and which transmits signals in a principal frequency range better than signals in the baseband frequency range, wherein the lower limit of the principal frequency range is higher than the upper limit of the baseband frequency range, having a signal mixing unit (26) or modulator unit which is connected downstream of the first separating unit (20) and the second separating unit (32) and which has a first input (E1), which receives signals coming from the first separating unit (20), and which has a second input (E2), which receives signals coming from the second separating unit (32), and which produces, at an output, a signal which is a mixture or modulation of the signals at the first input (E1) and the second input (E2).

14. Apparatus (10) according to Claim 13, **characterized by** a modulation unit (44) which is connected downstream of the first separating unit (20) and upstream of the first input (E1) of the mixing unit (26).

15. Apparatus (10) according to Claim 13 or 14, **characterized by** a servocontrol unit (46) which is connected downstream of the second separating unit (32) and upstream of the second input (E2) of the mixing unit (26) or modulator unit.

## Revendications

1. Procédé d'émission de données transmises par voie optique par l'intermédiaire d'une antenne radio (29), comportant les étapes: modulation d'un signal porteur en fonction de données à transmettre ou en fonction d'un signal de données à transmettre avec production d'un signal porteur modulé (72, 82), transmission du signal porteur modulé (72, 82) par l'intermédiaire d'une fibre optique (12), démodulation du signal porteur modulé transmis avec production de données reçues ou d'un signal de données reçu, production d'un signal porteur auxiliaire (HT) à partir du signal porteur modulé transmis, modulation du signal porteur auxiliaire (HT) en fonction des données reçues ou du signal de données reçu, émission du signal porteur auxiliaire modulé (HT) par l'intermédiaire d'une antenne radio (29).

2. Procédé selon la revendication 1, **caractérisé en ce que** l'on module le signal porteur selon une modulation d'amplitude en fonction des données à transmettre ou en fonction du signal de données à transmettre.

3. Procédé selon la revendication 2, **caractérisé en ce que** la différence entre une valeur de crête et la valeur minimale suivante dans le signal porteur modulé (72) reste identique mis à part des changements dus à des valeurs de données différentes les unes des autres.

4. Procédé selon la revendication 2, **caractérisé en ce que** la différence entre une valeur de crête et la valeur minimale suivante dans le signal porteur modulé (82) dépend de la valeur de la donnée à transmettre.

5. Procédé selon l'une des revendications précédentes, **caractérisé par** l'étape suivante : production du signal porteur auxiliaire (HT) à partir du signal porteur reçu en utilisant une régulation de poursuite (46).

6. Procédé selon l'une des revendications précédentes, **caractérisé par** l'étape suivante : production du signal porteur auxiliaire en utilisant une unité de filtrage (32).

7. Procédé selon l'une des revendications précédentes, **caractérisé en ce que** l'on utilise le procédé pour exploiter plusieurs antennes (29) qui transmettent simultanément des données par plusieurs voies de transmission radio vers un terminal.

8. Procédé selon l'une des revendications précédentes, **caractérisé en ce que** la fibre optique est une fibre polymère, notamment en polymères organiques.

9. Procédé selon l'une des revendications précédentes, **caractérisé en ce que** l'on utilise comme fibre optique (12) une fibre multimodale ou une fibre à gradient d'indice.

10. Procédé selon l'une des revendications précédentes, **caractérisé en ce que** l'on utilise une fibre optique (12) qui a au moins 50 mètres ou au moins 100 mètres de long et/ou **en ce que** l'on utilise un signal porteur avec une fréquence supérieure à 20 Gigahertz ou supérieure à 50 Gigahertz.

11. Procédé selon l'une des revendications précédentes, **caractérisé par** les étapes suivantes : réception d'un signal radio par l'intermédiaire d'une antenne de réception (29), utilisation du signal porteur auxiliaire (HT) pour démoduler le signal radio reçu.

12. Procédé selon l'une des revendications précédentes, **caractérisé par** les étapes suivante : utilisation du signal porteur auxiliaire (HT) pour moduler (52) avec des données à transmettre en retour ou avec un signal de données à transmettre en retour, transmission du signal porteur auxiliaire modulé (HT) par l'intermédiaire de la fibre optique (12) ou par l'intermédiaire d'une autre fibre optique.

13. Dispositif (10), avec une unité de conversion optique/électrique (14), avec une première unité de coupure (20) qui est branchée en aval de l'unité de conversion (14) et qui transmet mieux des signaux dans une plage de fréquences en bande de base que des signaux avec une fréquence en dehors de la plage de fréquences de base, avec une deuxième unité de coupure (32) qui est branchée en aval de l'unité de conversion (14) et qui transmet mieux des signaux dans une plage de fréquences primaires que des signaux dans la plage de fréquences en bande de base, la limite inférieure de la plage de fréquences primaires étant supérieure à la limite supérieure de la plage de fréquences en bande de base, avec une unité de mélange de signaux (26) ou unité modulatrice qui est branchée en aval de la première unité de coupure (20) et de la deuxième unité de coupure (32) et qui a une première entrée (E1) à laquelle arrivent des signaux provenant de la première unité de coupure (20) et une deuxième entrée (E2) à laquelle arrivent des signaux provenant de la deuxième unité de coupure (32) et qui produit à une sortie un signal qui est un mélange ou modulation des signaux à la première entrée (E1) et à la deuxième entrée (E2).

14. Dispositif (10) selon la revendication 13, **caractérisé par** une unité de modulation (44) qui est branchée en aval de la première unité de coupure (20) et en amont de la première entrée (E1) de l'unité de mélange (26).

15. Dispositif (10) selon la revendication 13 ou 14, **caractérisé par** une unité de régulation de poursuite (46) qui est branchée en aval de la deuxième unité de coupure (32) et en amont de la deuxième entrée (E2) de l'unité de mélange (26) ou unité modulatrice.
